# EUROPÄISCHE PATENTSCHRIFT

(11) **EP 1 033 294 B1**
(45) Veröffentlichungstag und Bekanntmachung des Hinweises auf die Patenterteilung: **03.09.2003**
(21) Anmeldenummer: 00104334.8
(22) Anmeldetag: 02.03.2000
(51) Int. Cl.: B60R 22/20

(54) **Höhenversteller für einen Sicherheitsgurtumlenkbeschlag in einem Kraftfahrzeug**
Height ajusting device for a safety belt guide loop in a motor vehicle
Dispositif de réglage en hauteur pour un ancrage de renvoi de ceinture de sécurité dans un véhicule á moteur

(30) Priorität: 25.10.1999 DE 19951292; 03.03.1999 DE 29903785 U; 18.03.1999 DE 29904925 U
(43) Veröffentlichungstag der Anmeldung: 06.09.2000
(73) Patentinhaber: Griesemer, Albert, 57462 Olpe-Biggesee (DE)
(72) Erfinder: Griesemer, Albert, 57462 Olpe-Biggesee (DE); Kreim, Adam, 64572 Büttelborn (DE)
(74) Vertreter: Grommes, Karl F., Dr.

(56) Entgegenhaltungen:
- WO-A-99/06247
- US-A- 4 564 219
- US-A- 4 840 403
- US-A- 5 186 495
- US-A- 5 522 618

## Beschreibung

Die Erfindung betrifft einen Höhenversteller nach dem Oberbegriff des Patentanspruches 1.

### [Stand der Technik]

Eine derartige Vorrichtung ist aus der DE 30 07 986 A1 bekannt. Die bekannte Vorrichtung besitzt eine Führungsschiene, an deren Grundfläche zwei längsverlaufende Seitenschenkel vorgesehen sind. Die längsverlaufenden Enden der Seitenschenkel sind umgebogen und parallel zu den Seitenschenkeln verlaufend auf die Grundfläche zugerichtet. Die so umgebogenen Enden haben im wesentlichen senkrecht zur Grundfläche verlaufende geradlinige Sperrflächen innerhalb sägezahnförmiger Ausnehmungen. Einer jeweiligen senkrecht ausgerichteten Sperrfläche ist eine geneigte Kante und eine im wesentlichen parallel zur Grundfläche verlaufende Kante zugeordnet. Zwischen den umgebogenen Enden wird ein Längsschlitz gebildet, entlang welchem ein Verstellteil, an dem der Umlenkbeschlag befestigt ist, zur Höhenverstellung verschiebbar ist. Am Verstellteil ist eine Arretiereinrichtung vorgesehen, die ein T-förmiges Arretierelement aufweist, dessen seitliche Fortsätze einen Sperriegel bilden, der mit Vorspannung in der jeweiligen Höhenposition eine lösbare Verriegelungsstellung einnimmt. In dieser Position können zumindest bei vom Sicherheitsgurt ausgehender Belastung am Sperr-Riegel eben ausgebildete Anschlagflächen mit einem Teil der Sperrflächen in Anlage kommen. Mit Hilfe einer Entriegelungseinrichtung kann der Verriegelungszustand gelöst werden und die Anschlagflächen des Verriegelungselementes werden an den Sperrflächen vorbei bewegt und in eine neue Höhenposition gebracht.

Bei den bekannten Vorrichtungen entstehen insbesondere bei einem Unfall an den Stellen, an denen das Verriegelungselement an der Führungsschiene anliegt, hohe Kräfte. Es ist daher erforderlich, für die Führungsschiene eine relativ hohe Materialstärke zu wählen, um dieser, eine ausreichende Formsteifigkeit zu geben.

Ein durch die EP 0 126 578 A1 bekannter Höhenversteller besitzt eine Führungsschiene von etwa U-förmigem Querschnitt mit einem Verstellteil von ebenfalls etwa U-förmigem Querschnitt, wobei die Seitenabschnitte (Schenkel) des Verstellteils ebenso lang sind wie der Mittelabschnitt (Basis). Als Arretiermittel sind Aussparungen an der Basis vorgesehen, welche in Eingriff mit den sägezahnförmigen Enden der Führungsschiene gebracht werden können. Der Verstellweg des Verstellteils wird von der Länge des Schlitzes bestimmt bzw. dem Abstand der Befestigungsmittel der Führungsschiene, je nachdem, ob das Verstellteil eher mit seiner Gewindebuchse für den Umlenkbeschlag das Ende des Schlitzes erreicht oder mit seiner Basis an einem Befestigungsmittel der Führungsschiene anstößt.

Da bei dem bekannten Höhenversteller die Endabschnitte zu einem beträchtlichen Teil nicht zum Verstellen genutzt werden können, erreichen solche Höhenversteller jeweils eine große Baulänge, ein hohes Gewicht und verursachen entsprechende Herstellungskosten. Als weiterer Nachteil haftet ihnen an, daß das Verstellteil - einerseits geschwächt durch die zur Arretierung vorgesehenen Aussparungen und andererseits nur auf kurzer Strecke von der Führungsschiene gehalten - keinen allzu hohen Verformungs- und Ausziehwiderstand bietet. Würde das Verstellteil dagegen verlängert, so würde sich entweder der Verstellweg verkürzen oder aber die Baulänge vergrößern, was entweder den Gebrauchswert einschränken oder aber vermehrt die erst genannten Nachteile nach sich ziehen würde.

Um die hohen Zugkräfte im Crashfall aufnehmen zu können, sind bei den bekannten Höhenverstellern hohe Materialstärken (z.B. 2- 3 mm für die Führungsschiene) erforderlich, was auch in Wechselbeziehung zur jeweiligen Form und Ausbildung der Führungsschiene (z.B. Schwächungsstellen durch Aussparungen oder ähnliches) steht.

Im übrigen wird vom Anwender ein gewisser Bedienungskomfort erwartet, was die Verstellmanipulation anbelangt. Daraus resultieren vielfach Ausführungsformen mit immer mehr Einzelteilen und verhältnismäßig großen Baumaßen (z.B. Führungsschienen mit einem Abstand von 180 mm und mehr zwischen den Befestigungsschrauben). Die vorgenannten Aspekte wirken sich schließlich auch allesamt auf das Eigengewicht (z.Zt. meist über 370 g je Höhenversteller) und letzlich die Gestehungskosten aus. Mit einem gattungsgemäßen Höhenversteller soll zusätzlich noch erreicht werden, daß für die Crashfalle auftretenden Kräfte nurmehr minimale Einwirkungsmöglichkeiten verbleiben.

Aufgabe der Erfindung ist es, einen Höhenversteller so weiterzubilden, daß er den erwähnten Anforderungen an Sicherheit und Komfort entspricht, dabei jedoch leichter, d.h. mit geringeren Materialstärken auskommt.

Gelöst wird diese Aufgabe mit den Merkmalen des kennzeichnenden Teils von Anspruch 1. Zweckmäßige Weiterbildungen geben die Unteransprüche an.

Nach Anspruch 1 ist ein verhältnismäßig einfacher Arretiermechanismus vorgesehen, welcher eine verhältnismäßig kurze Bauform des Verstellteils erlaubt. Ein hoher Formschluß zwischen Verstellteil und Führungsschiene dient der gewünschten Formsteifigkeit und damit Sicherheit, wobei die Führungsschiene selbst durch die vorgeschlagene Form samt Aussparungen so widerstandsfähig ist, daß die Materialstärke recht gering gewählt werden kann. Selbst für den Arretiermechanismus gilt, daß der Eingriff an mehreren Stellen verhältnismäßig geringe Stift- und Bolzenstärken und im Ergebnis einfache Normteile zuläßt, was weiter mit kompakter Bauform und Gewichtseinsparung einhergeht.

So wird denn mit der vorliegenden Erfindung ein sicherer und bequemer Höhenversteller mit günstigen Baumaßen (z.B. einer um 15 mm verkürzten Führungsschiene), geringerer Materialstärke (z.B. 1,5 mm statt 2 mm) und geringerem Eigengewicht (nunmehr ca. 300 g statt ca. 370 g je Höhenversteller) zur Verfügung gestellt. Die Reduzierung des Eigengewichts wirkt sich dabei in der Regel gleich vierfach je Fahrzeug, d.h. mit 0,280 kg aus, da im Normalfall jedes Fahrzeug mit vier Höhenverstellern ausgestattet wird.

Bisher erforderliche zusätzliche Maßnahmen zur Vorrastung entfallen, weil durch die Gestaltung der Führungsschiene, das sind die sogenannten sägezahnförmigen Ausnehmungen, eine Zwangseinsteuerung des Arretierteils in die nächste Höhenstufe des Höhenverstellers erfolgt. Sobald nämlich das Arretierteil entriegelt und das Verstellteil in die gewünschte Richtung verschoben ist, genügt es, das Arretierteil einfach wieder loszulassen, wodurch es wieder unter den Einfluß (Druck) des elastischen Halteorgans gerät. So gelangen dann die Arretierelemente bei weiterer Bewegung des Verstellteils über das gegebene Kuvenprofil - ohne durchzurasten - zwangsweise in die nächste Höhenstufe. Man möchte deshalb bei den Arretierelementen auch von Rast- und Arretierstiften oder -bolzen sprechen.

Die Erfindung ist nicht auf eine bestimmte Führungsschiene beschränkt, vielmehr kann sie bei unterschiedlichen Führungsschienen verwirklicht werden, darunter solchen, welche außerhalb der B- und C-Säulenverkleidung von Fahrzeugen anbringbar sind, ebensogut aber auch solchen, welche unter der B- und C-Säulenverkleidung vorgesehen sind.

Vorteilhaft umfaßt das Verstellteil mindestens ein Kernteil aus Metall, welches ggfs. mit einem Gleitteil aus Kunststoff verbindbar ist, wobei letzteres insbesondere zwischen Kernteil und Führungsschiene (an Schenkel und ggfs. Grundfläche) wirksam ist. Das Gleitteil kann einstückig und nur so bemessen sein, daß es für eine reibungsarme und geräuschfreie Führung des Verstellteils sorgt. Es kann aber auch das Kernteil sozusagen kapseln, wozu es dann aus einem etwa schalenförmigen Ober- und Unterteil gebildet ist. Alternativ kann das Kernteil auch unlösbar kunststoffbeschichtet sein.

Bei einer Weiterbildung besitzt das Gleitteil eine dem Querschnitt des Kernteils angepaßte Struktur zum Aufschieben auf das Kernteil und im übrigen in Verschieberichtung weisende und am Kopf des Kernteils zu sichernde Stege oder dergleichen.

Vorteilhaft weist das Kernteil Längsnuten zur teilweisen Aufnahme der Stege auf.

Zweckmäßigerweise verfügen die Stege über nach außen gebogene elastische Abschnitte.

Nach einem weiteren Vorschlag sind die freien Enden der Stege nasenförmig ausgebildet und bilden eine Art Clipsverbindung am Kopf des Kernteils.

Zweckmäßigerweise bildet das Gleitteil ein Lager für den Entriegelungshebel.

Vorteilhaft ist das elastische Halteorgan eine zwischen Verstellteil und Arretierteil sich abstützende Schenkelfeder. Alternativ dazu können auch andere Federn insbesondere Druckfedern, sowie Gleit- und Klemmfedern eingesetzt werden.

Bei einer bevorzugten Ausführungsform ist das Arretierteil in etwa T-förmig ausgebildet, wobei es einen Führungsabschnitt sowie einen Trägerabschnitt umfaßt, in den die Arretierbolzen eingesetzt sind.

Nach einem weiteren Vorschlag ist in das Kernteil eine Gewindebuchse eingepreßt, welche die Gewindebohrung zur Aufnahme der Befestigungsschraube für den Umlenkbeschlag enthält. Dies kommt für geringe Materialstärken des Kernteils in Betracht. Alternativ dazu kann bei genügender Stärke des Kernteils die Gewindebuchse auch aus dem Material des Kernteils selbst gezogen und damit einstückig sein.

Bei der Erfindung werden für die Arretierung einfache Mittel vorgeschlagen, welche das Verstellteil weder in irgendeiner Weise schwächen noch in seiner Bauform beeinträchtigen. Sie können verhältnismäßig gering dimensioniert und im übrigen einfache Normteile sein. Beispielsweise kann es sich um einen einzigen Stift oder Bolzen handeln, welcher von dem Verstellteil mitgeführt wird und mit diesem starr oder auch beweglich verbunden ist. Bei einer starren Verbindung muß das Verstellteil zusätzlich zu seiner Längsverschieblichkeit auch noch Bewegungsfreiheit zum Arretieren, d.h. zum Ein- und Ausrasten besitzen. Werden dagegen Arretiermittels gewählt, welche zum Verstellteil relativ beweglich sind, d.h. welche selbst zum Ein- und Ausrasten bewegt werden können, kann sich die Beweglichkeit des Verstellteils auf eine reine Längsverschieblichkeit - im Interesse hoher Spurtreue und Sicherheit - beschränken.

Im übrigen nutzt die Erfindung den Umstand, daß die Verwindungssteifigkeit, der Ausziehwiderstand und letztlich die Sicherheit im Crashfalle viel stärker durch das Zusammenwirken der Führungselemente von Verstellteil und Führungsschiene beeinflußt werden können. So sollen denn diese Bereiche jetzt in verstärktem Maße genutzt und dabei so gestaltet werden, daß sich die Baulänge des Höhenverstellers nicht zu vergrößeren braucht. Vielmehr ist es jetzt möglich, einen Höhenversteller von größerer Sicherheit und mit einem längeren nutzbaren Verstellweg zu erhalten. Umgekehrt kann nun bei gleichem Verstellweg die Baulänge verringert und Gewicht sowie Material- und anderem auch wegen der geringen Durchbiegung-bei unverminderter Sicherheit eingespart werden, und zwar in einer Größenordnung bis zu 20%. Dies haben Reißversuche bestätigt.

Weitere Einzelheiten und Vorteile werden anhand der Zeichnung für verschiedene bevorzugte Ausführungsformen beschrieben.

Darin zeigen
- Fig. 1: eine erste Ausführungsform eines erfindungsgemäßen Höhenverstellers mit seinen Einzelheiten in einer explosivartigen Darstellung;
- Fig. 2: den Gegenstand von Fig. 1 in zusammengesetzter Form, und zwar in einem Längsschnitt entlang der Führungsschiene;
- Fig. 3: den Gegenstand von Fig. 2 in Draufsicht;
- Fig. 4: den Gegenstand von Fig. 3 im Querschnitt entlang der Linie IV-IV und zwar im Zustand der Arretierung;
- Fig. 5: den Gegenstand von Fig. 3 im Querschnitt entlang der Linie V-V im entriegelten Zustand;
- Fig. 6: eine vereinfachte Darstellung, entsprechend der Fig. 2, zur Veranschaulichung des gegebenen Verstellweges;
- Fig. 7: ein etwas anderes Verstellteil, nämlich mit einer Gewindebuchse in einer Darstellung gemäß Fig. 6;
- Fig. 8: einen Höhenversteller mit anderer Führungsschiene als zuvor, nämlich einer U-förmigen Führungsschiene zum Anschrauben, im Längsschnitt;
- Fig. 9: den Gegenstand von Fig. 8 im Querschnitt entlang der Linie IX-IX;
- Fig. 10: das Verstellteil von Fig. 8 und 9 samt Gleitteilen in einer explosionsartigen Darstellung;
- Fig. 11: einen Höhenversteller mit noch anderer Führungsschiene, nämlich einer U-förmigen Führungsschiene zum Einhängen, im Längsschnitt;
- Fig. 12: den Gegenstand von Fig. 11 im Querschnitt entlang der Linie XII-XII;
- Fig. 13: eine weitere Ausführungsform eines erfindungsgemäßen Höhenverstellers mit einem etwas anders gestaltenden Arretierteil in einer Darstellung gemäß Fig. 1;
- Fig. 14: den Gegenstand von Fig. 13 in eine Darstellung gemäß Fig. 2;
- Fig. 15: den Gegenstand von Fig. 14 in Draufsicht;
- Fig. 15: den Gegenstand von Fig. 15 in einem Schnitt entlang der Linie XVI-XVI;

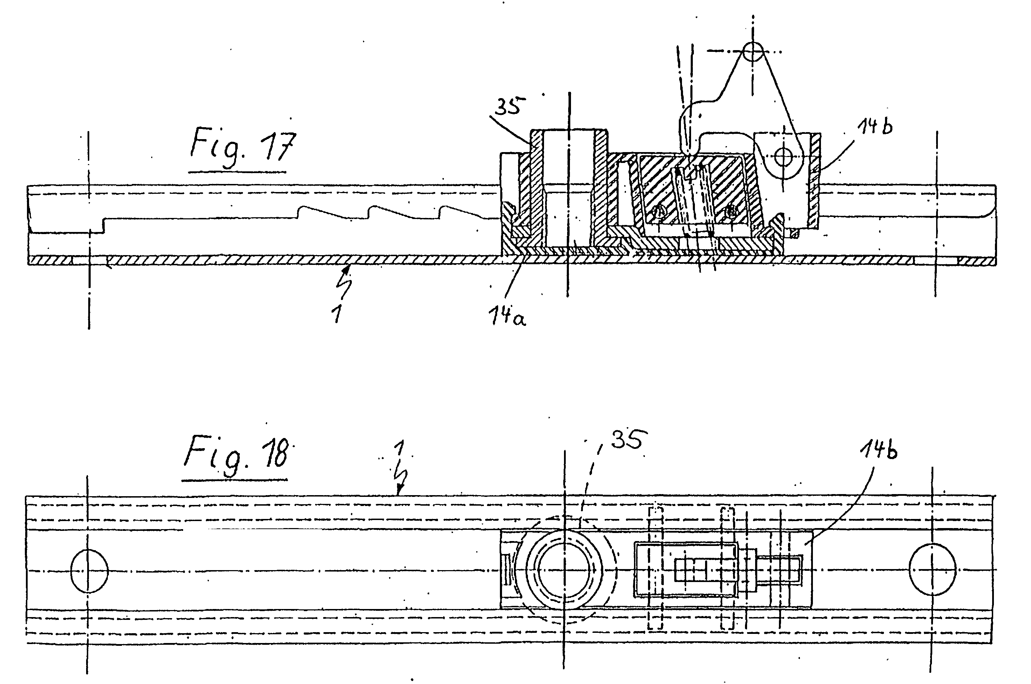

- Fig. 17: eine weitere Ausführungsform eines erfindungsgemäßen Höhenverstellers, nämlich mit einem mehrteiligen Verstellteil im Längsschnitt entlang der Führungsschiene;
- Fig. 18: den Gegenstand von Fig. 17 in Draufsicht;

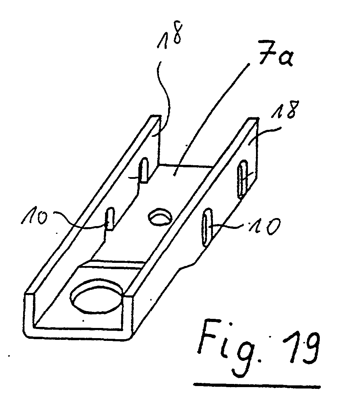

- Fig. 19: einen Teil des Verstellteils von Fig. 17 und 18, nämlich das metallische Kernteil in perspektivischer Ansicht;

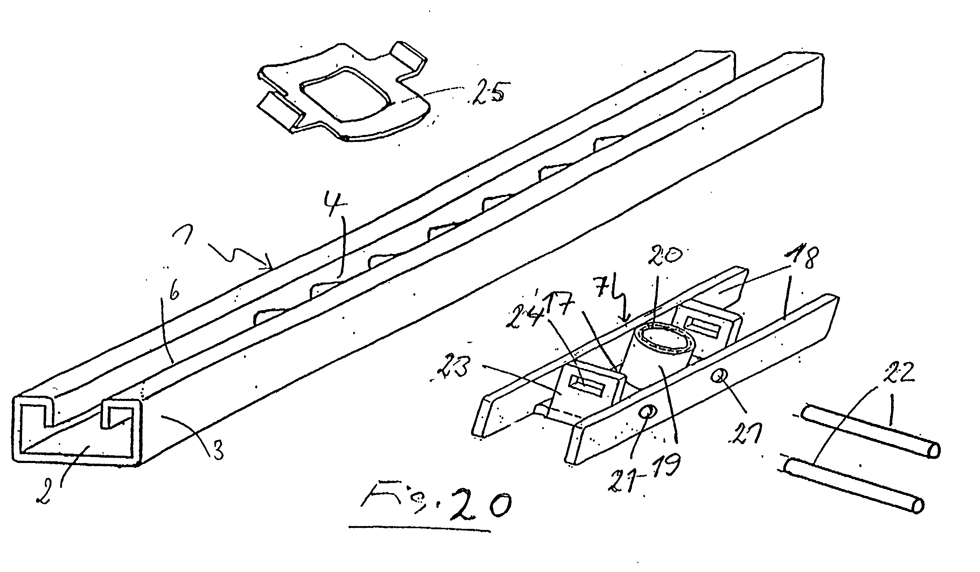

- Fig. 20: eine erste Ausführungsforme eines erfindungsgemäßen Höhenverstellers, in einzelne Bauteile zerlegt, in perspektivischer Ansicht;
- Fig. 21: einen Längsschnitt durch den Höhenversteller von Fig. 20 im montierten Zustand;

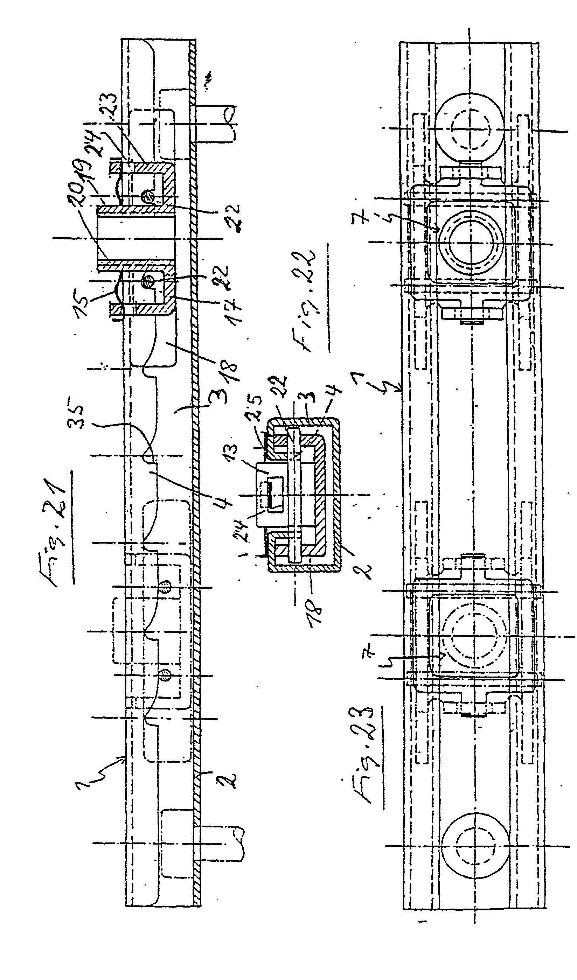

- Fig. 22: einen Querschnitt durch den Gegenstand von Fig. 21 entlang eines Rastbolzens;
- Fig. 23: eine Draufsicht auf den Gegenstand von Fig. 21;
- Fig. 24: eine zweite Ausführungsform eines erfindungsgemäßen Höhenverstellers mit anderem Arretiermechanismus in einer Darstellung ähnlich Fig. 20;

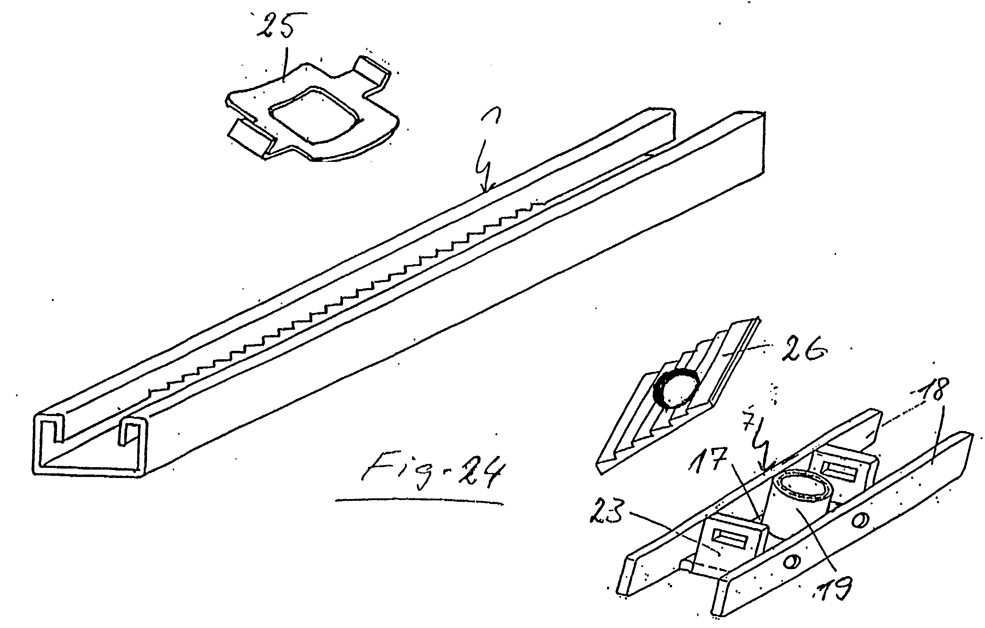

- Fig. 25: den Gegenstand von Fig. 24 in einer Darstellung ähnlich Fig. 21;
- Fig. 26: einen Querschnitt durch den Gegenstand von Fig. 24 entlang der Linie VI-VI;

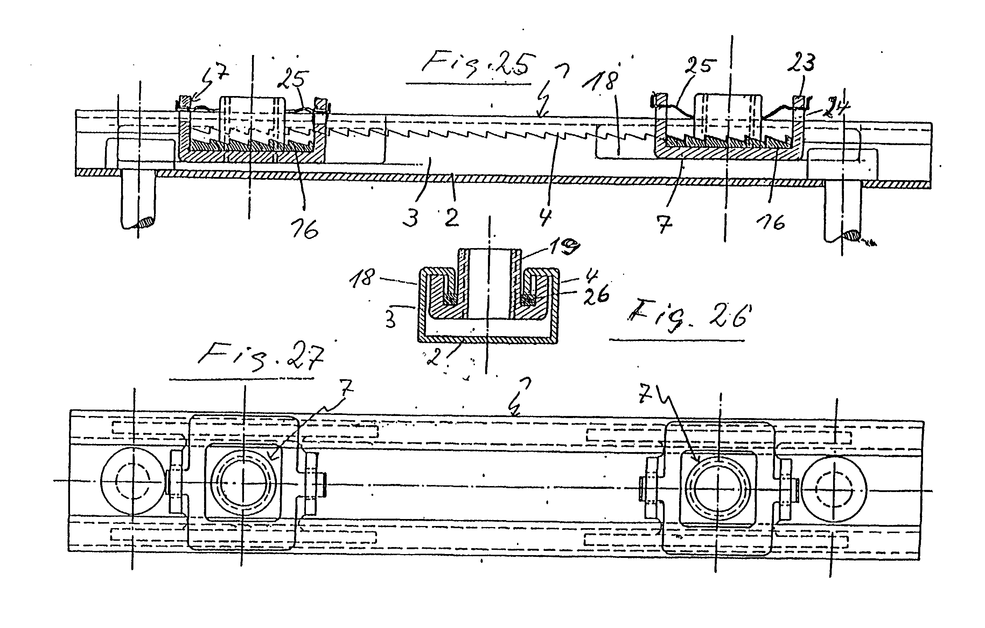

- Fig. 27: den Gegenstand von Fig. 24 in einer Darstellung ähnlich Fig. 23;

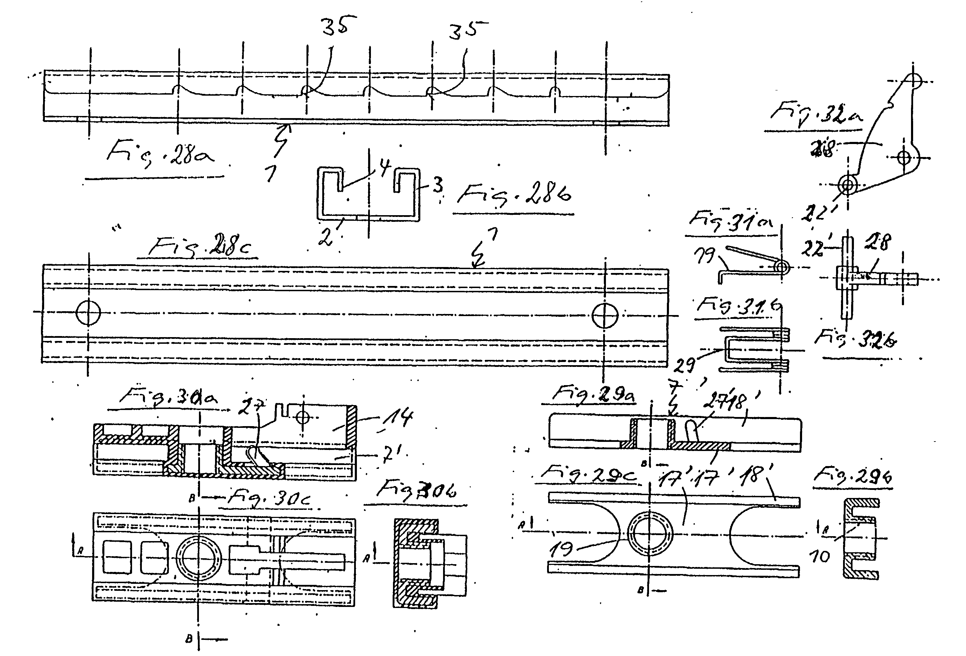

- Fig. 28a bis 32b: eine dritte Ausführungsform eines erfindungsgemäßen Höhenverstellers mit noch anderem Arretiermechanismus, in einzelne Bestandteile zerlegt, wobei die Bestandteile in verschiedenen Darstellungen (Längsschnitt bzw. -ansicht, Querschnitt und Draufsicht) wiedergegeben sind;

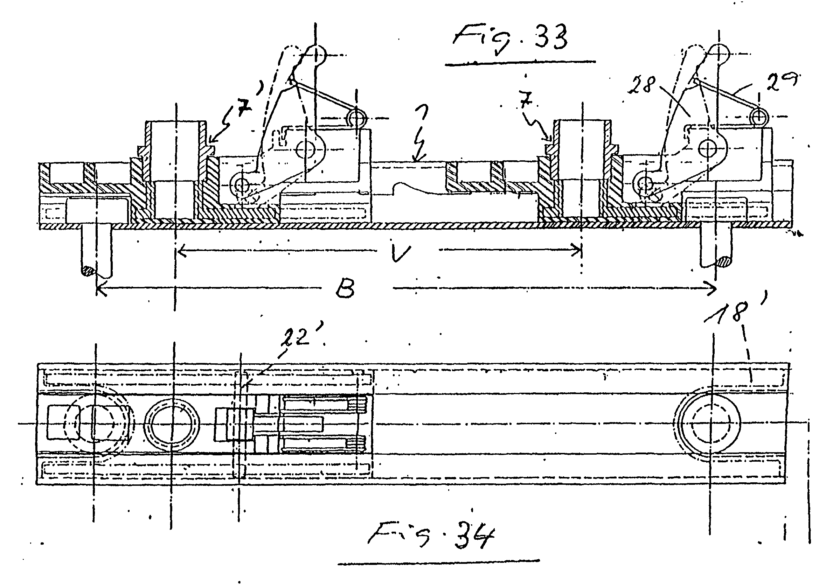

- Fig. 33: einen Längsschnitt durch den Höhenversteller von Fig. 28a bis 32b im montierten Zustand;

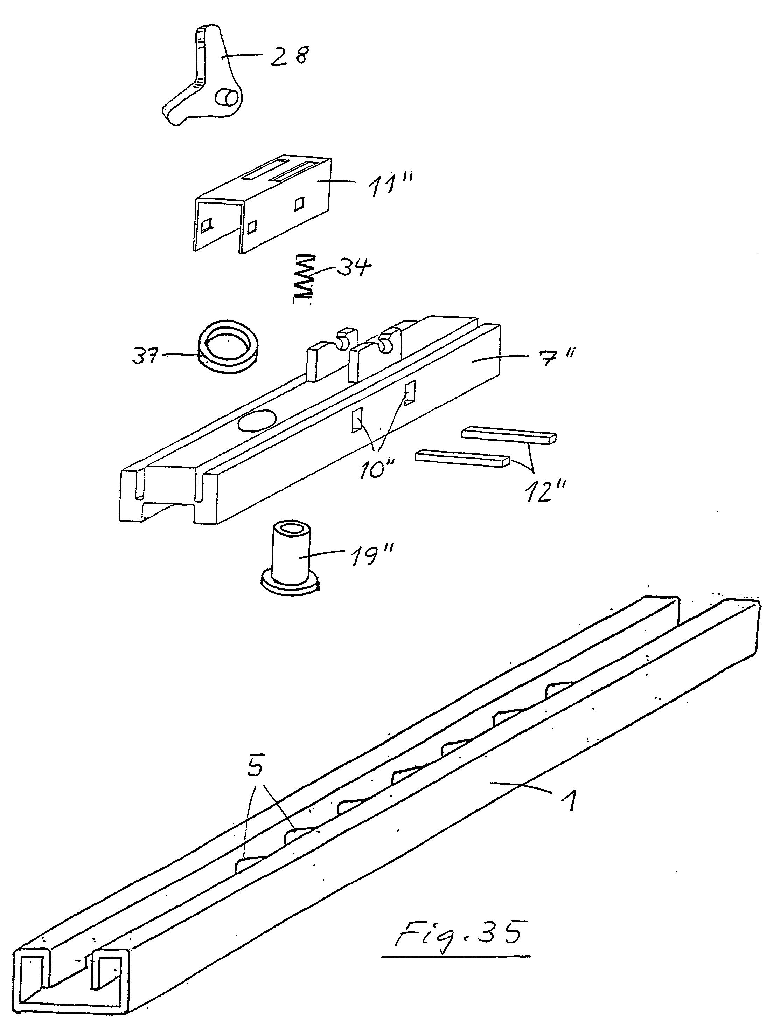

- Fig. 34: eine Draufsicht auf den Gegenstand von Fig. 33;
- Fig. 35: eine weitere Ausführungsform eines erfindungsgemäßen Höhenverstellers mit seinen Einzelheiten in einer explosionsartigen Darstellung;

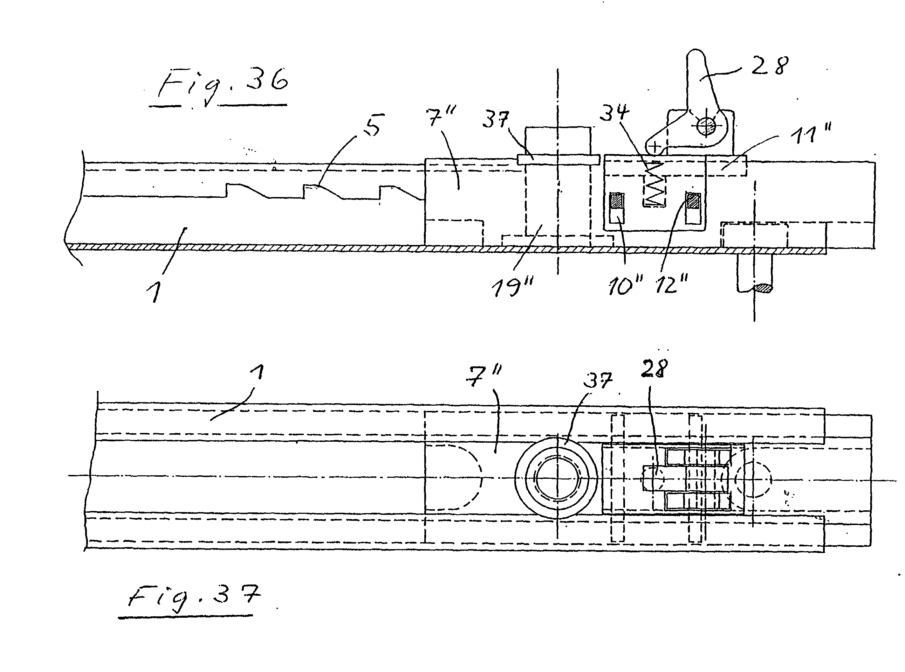

- Fig. 36: den Gegenstand von Fig. 35 in zusammengesetzter Form, und zwar in einem Längsschnitt entlang der Führungsschiene;

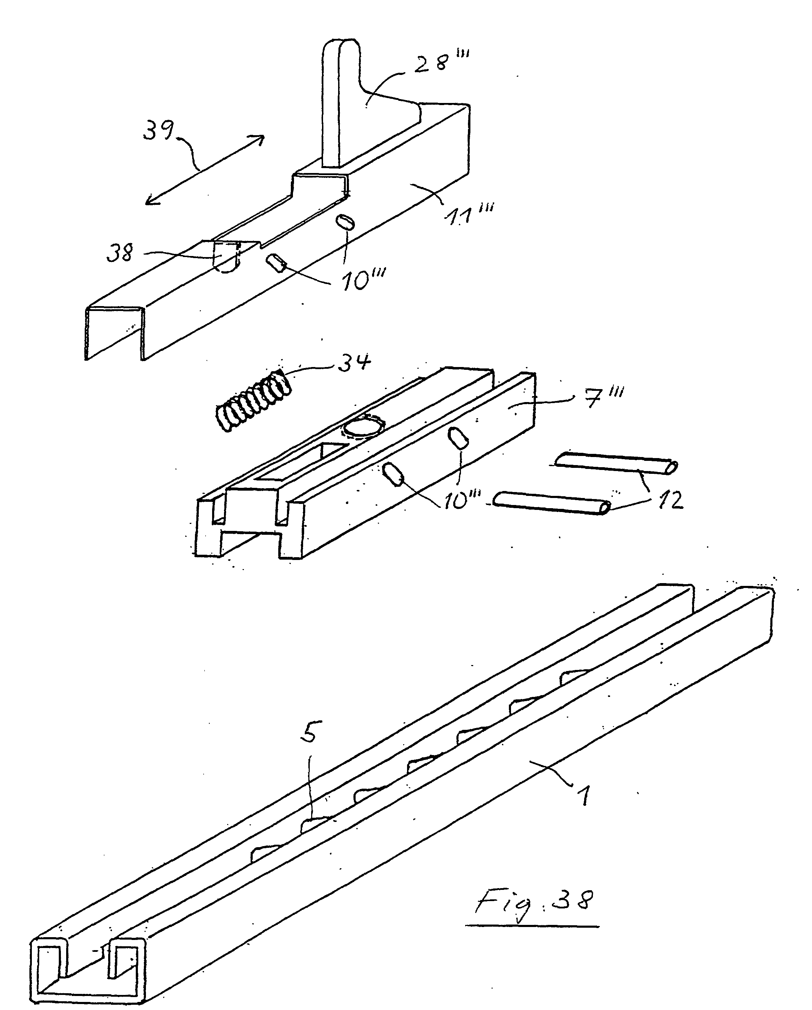

- Fig. 37: den Gegenstand von Fig. 36 in Draufsicht;
- Fig. 38: noch eine andere Ausführungsform eines erfindungsgemäßen Höhenverstellers mit seinen Einzelheiten in einer explosionsartigen Darstellung;

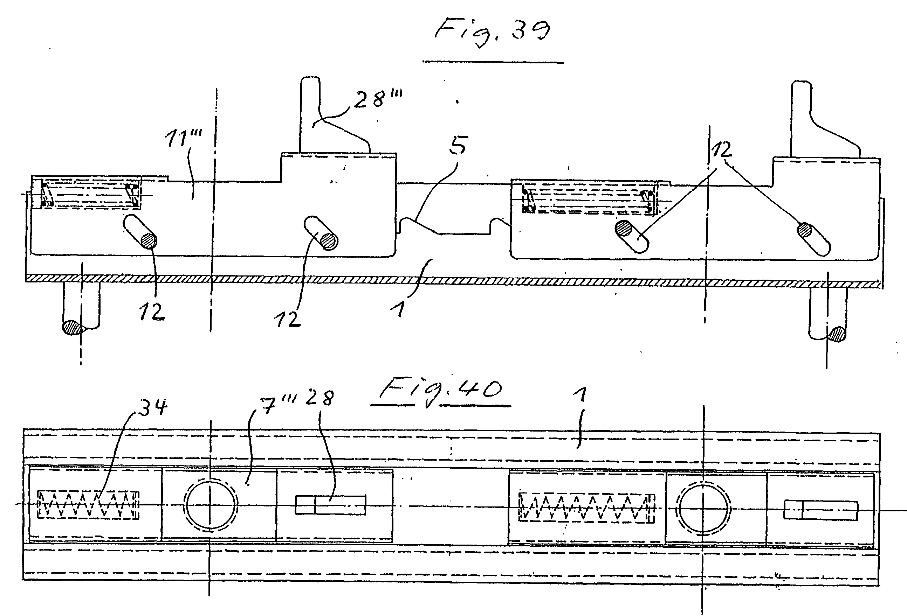

- Fig. 39: den Gegenstand von Fig. 38 in zusammengesetzter Form, und zwar in einem Längsschnitt entlang der Führungsschiene; und
- Fig. 40: den Gegenstand von Fig. 39 in Draufsicht.

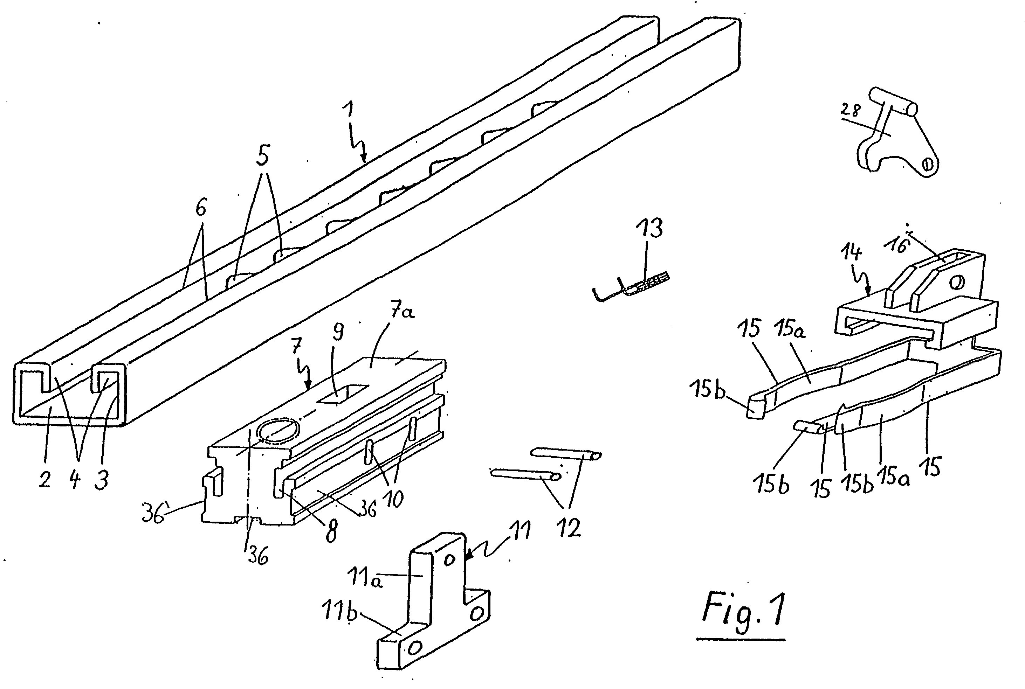

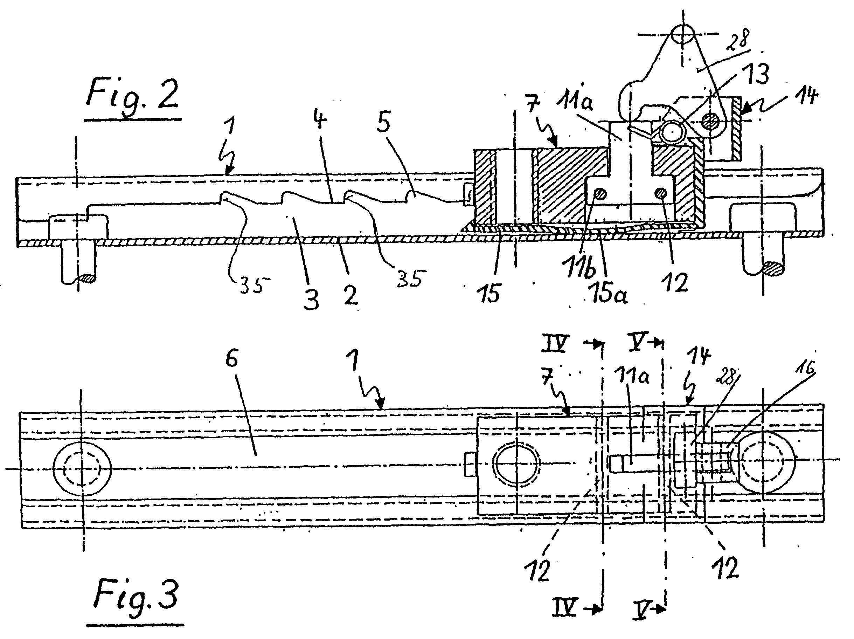

Nach den Figuren 1 bis 5 besteht eine erste Ausführungsform eines erfindungsgemäßen Höhenverstellers aus einer etwa C-förmigen Führungsschiene 1 aus Metall mit einer Grundfläche 2 und Seitenschenkeln 3, an die sich winklig abgebogene Schenkelabschnitte bzw. freie Enden 4 anschließen. Letztere sind mit sägezahnförmigen Ausnehmungen 5 versehen und begrenzen im übrigen einen Längsschlitz 6. Entlang dem Längsschlitz 6 ist ein Verstellteil 7 verschieblich, wobei letzteres Ausnehmungen 8 für die freien Enden 4 und die anschließenden Schenkelabschnitte der Führungsschiene 1 aufweist. Weitere Ausnehmungen 9 und 10 sind für ein quer dazu bewegliches Arretierteil 11 mit darin eingesetzten Arretier- oder Rastbolzen bzw. -stiften 12 vorgesehen. Das Verstellteil 7 besteht hier aus einem Aluminium-Druckguß, könnte aber ebensogut aus Aluminium stranggepreßt sein oder aber aus einem Kunststoff-Spritzguß bestehen, dann vorzugsweise mit einer Metalleinlage zur Verstärkung. Das Arretierteil 11 besteht aus Kunststoff, während die Stifte 12 aus Metall bestehen.

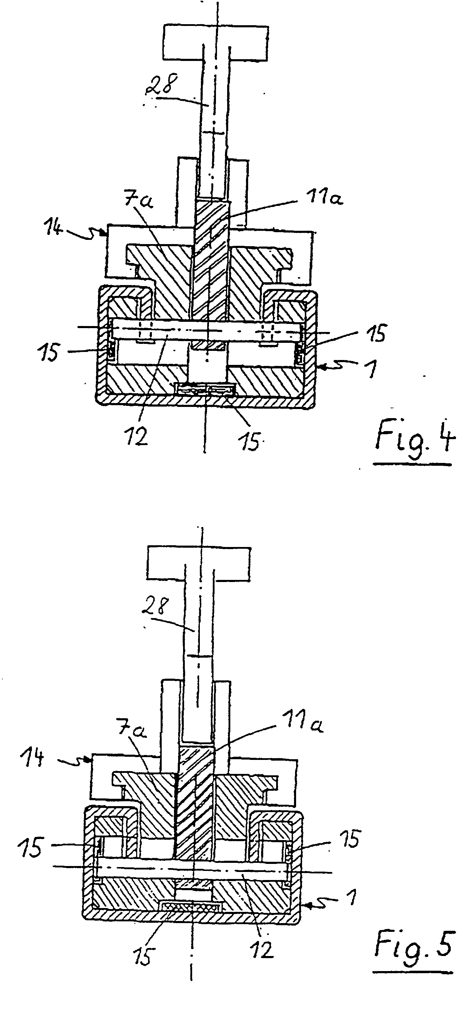

Zwischen dem Verstellteil 7 und dem Arretierteil 11 ist ferner ein elastisches Halteorgan 13 vorgesehen, nämlich vorliegend in Form einer Schenkelfeder 13a aus Metall. Dem Verstellteil 7 ist im übrigen ein Gleitteil 14 aus Kunststoff zugeordnet, welches auf das Verstellteil 7 aufschiebbar ist und in Verschieberichtung weisende Stege aufweist, welche am Kopf des Verstellteils 7 zu sichern sind. Das Verstellteil 7 stellt sozusagen ein Kernteil 7a dar, welches durch das Gleitteil 14 ergänzt wird. Wie ersichtlich, weist das Verstellteil 7 bzw. Kernteil 7a Längsnuten 36 zur teilweisen Aufnahme der Stege 15 auf. Die Stege 15 sind zwischen Kernteil 7a und Führungsschiene 1 wirksam, wie insbesondere aus den Fig. 4 und 5 hervorgeht, und verfügen über nach außen gebogene elastische Abschnitte 15a. Im übrigen weisen die Stege 15 nasenförmig ausgebildete freie Enden 15b auf, mit denen sie am Kopf des Verstellteils 7 / Kernteils 7a eine Art Clipsverbindung bilden. Schließlich bildet das Gleitteil 14 auch ein Lager 16 für einen Entriegelungshebel 28 aus Kunststoff.

Wie insbesondere die Fig. 1 sowie 4 und 5 erkennen lassen, verfügt das Arretierteil 11 über einen Führungsabschnitt 11a und einen Trägerabschnitt 11b, welcher die Rastbolzen 12 aufnimmt, die dann in den Ausnehmungen 9 bzw. 10 auf- und abbewegt werden können. Eine Aufwärtsbewegung, wie sie von der Schenkelfeder 13a bewirkt wird, führt zu einem Eingriff der Rastbolzen 12 mit den Ausnehmungen 5 der Führungsschiene 1, wie in Fig. 4 dargestellt. Eine Abwärtsbewegung, wie sie insbesondere mit Hilfe des Entriegelungshebels 28 herbeigeführt werden kann, hebt die zuvor beschriebene Arretierung wieder auf (vgl. Fig. 5) und läßt das Aufsuchen einer neuen Arretierstellung zu.

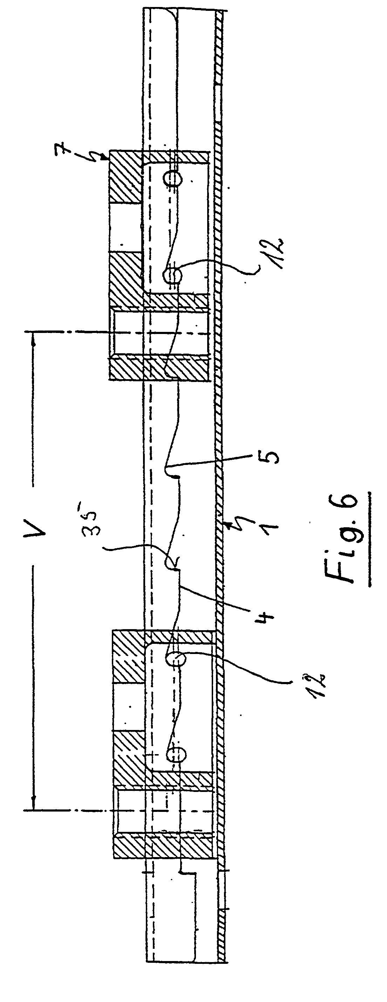

Der Verstellweg V wird entweder durch Befestigungsmittel an den Enden der Führungsschiene 1 begrenzt oder aber durch die Ausnehmungen 5 der Führungsschiene 1, wie in Fig. 6 veranschaulicht.

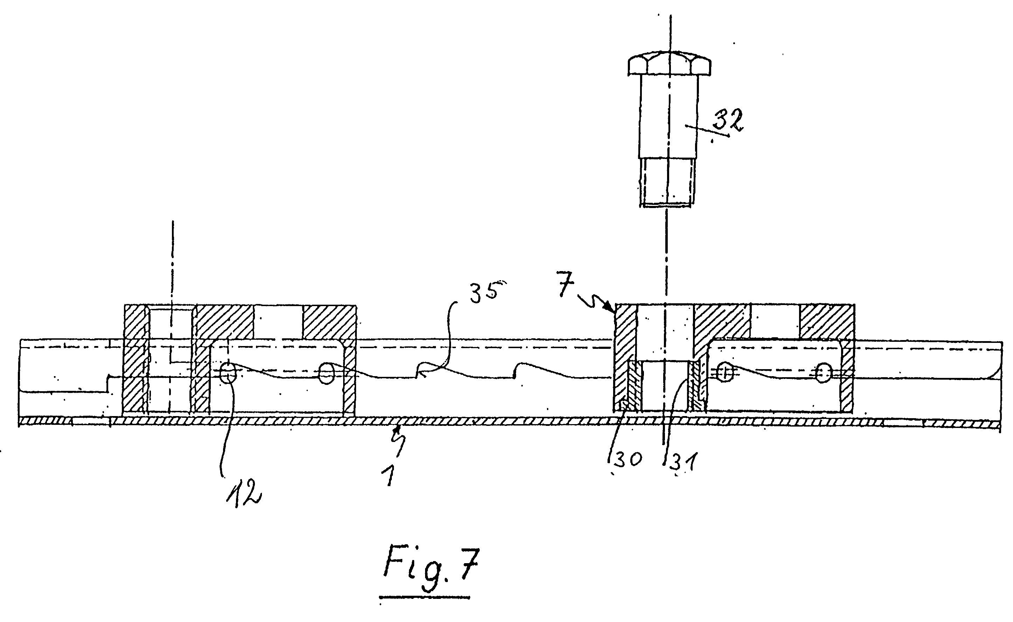

Nach Fig. 7 ist in das Verstellteil 7 oder ein entsprechendes Kernteil 7a eine Gewindebuchse 30 mit einer Gewindebohrung 31 eingepreßt. Darin läßt sich eine Befestigungsschraube 32 für einen Umlenkbeschlag eindrehen.

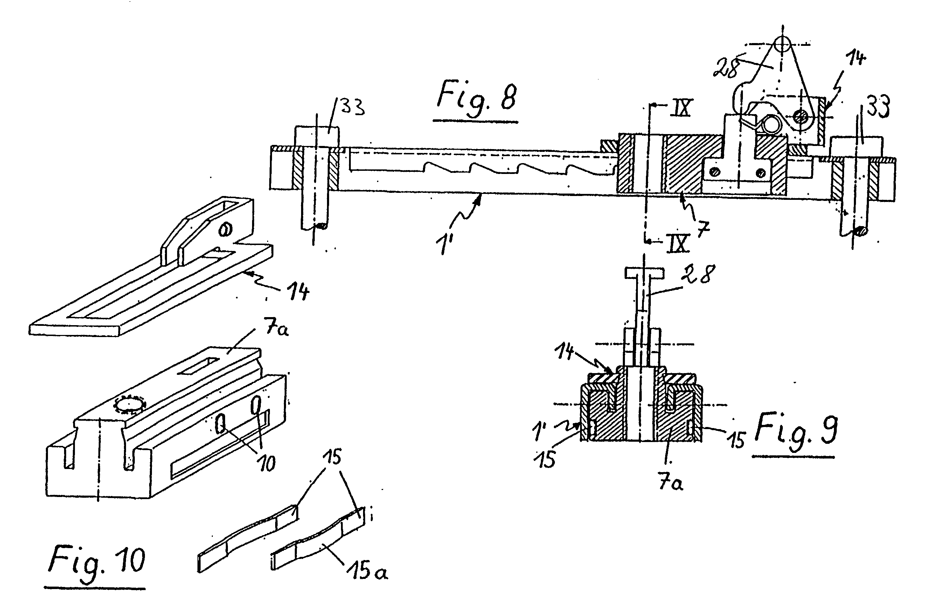

Gemäß den Fig. 8 bis 10 läßt sich der Erfindungsgedanke auch an einer U-förmigen Führungsschiene 1 realisieren, welche mittels Schrauben 33 an einer Fahrzeugsäule anzuschrauben ist. Dabei kann das Gleitteil 14 auch mehrteilig ausgeführt sein, beispielsweise mit losen Stegen 15.

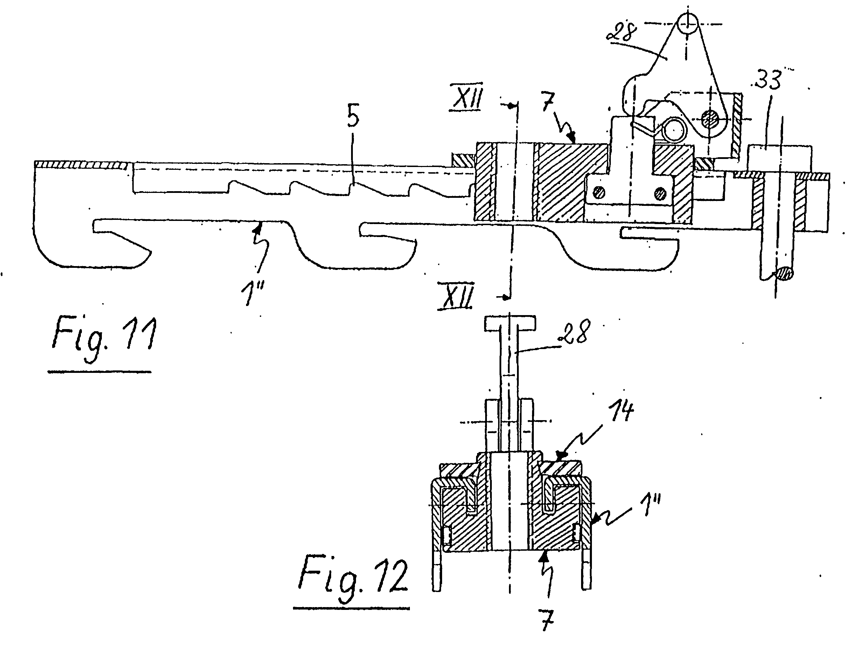

Nach den Figuren 11 und 12 ist eine andere Führungsschiene 1'' zum Einhängen in Schlitze einer Fahrzeugsäule ausgebildet. Im übrigen entspricht der Höhenversteller dem vorgenannten Ausführungsbeispiel.

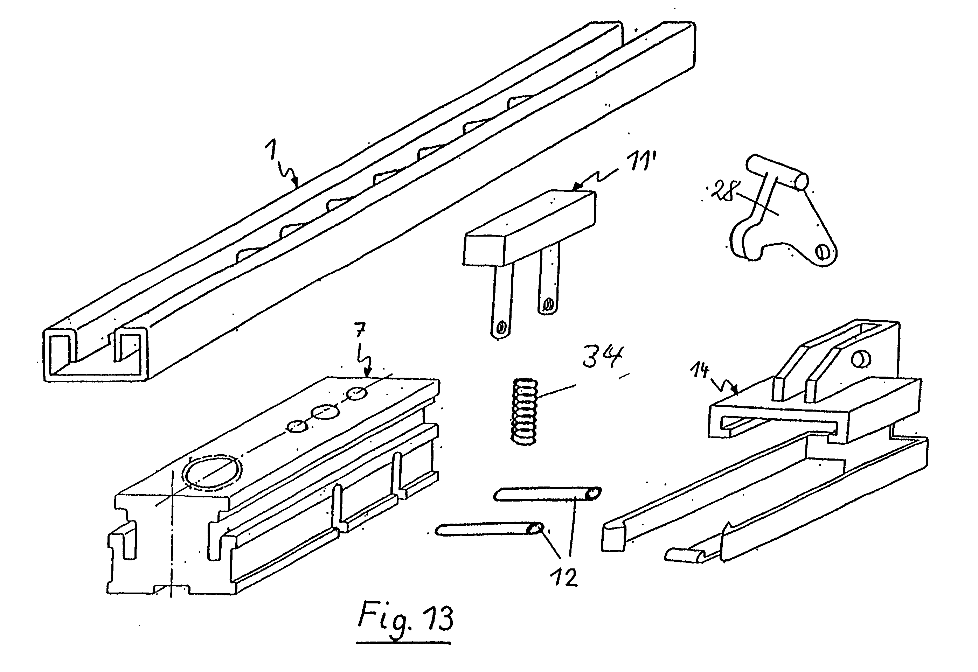

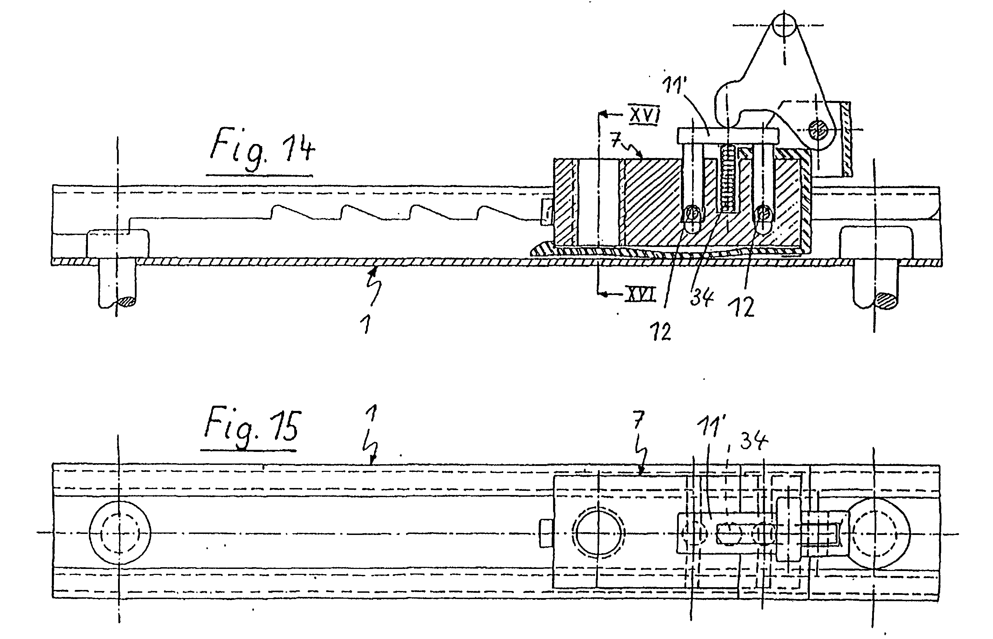

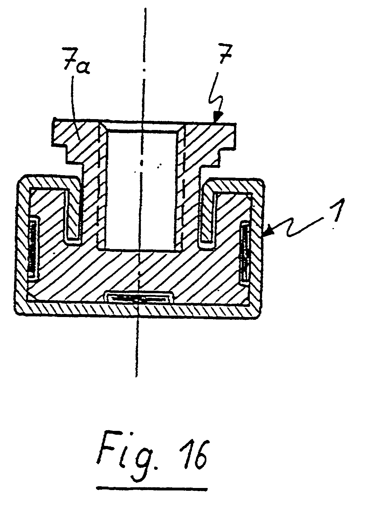

Die Figuren 13 bis 16 lassen Unterschiede zum erstgenannten Ausführungsbeispiel dergestallt erkennen, daß hier das Arretierteil 11' anders ausgebildet ist und auch das elastische Halteorgan anders gewählt wurde, nämlich als Druckfeder 34.

Schließlich lassen die Figuren 17 bis 19 noch folgende Variante erkennen. Das Verstellteil 7 ist jetzt in der Weise ausgebildet, daß ein in etwa U-förmiges Kernteil 7a (vgl. Fig. 19) eine Bundmutter 35 trägt und von einem Gleitteil 14 nahezu vollständig umgeben, also quasi gekapselt ist. Das Gleitteil 14 besteht dazu aus einem Unterteil 14a und einem Oberteil 14b, welche miteinander verclipsbar sind.

Nach Fig. 20 läßt sich ein erfindungsgemäßer Höhenversteller mit nur wenigen und sehr einfachen Bestandteilen realisieren. Mit der Bezugsziffer 1 ist eine metallene Führungsschiene von C-förmigem Querschnitt bezeichnet, bei der Seitenschenkel 3 mit zur Grundfläche 2 umgebogenen Enden 4 den Längsschlitz 6 begrenzen. Die Enden 4 sind dabei in etwa sägezahnförmig ausgebildet, wie etwas deutlicher aus Fig. 21 hervorgeht. Ein Verstellteil 7 ist aus einem flachen Bandstahl derart gestanzt und geformt, daß es über einen verhältnismäßig kurzen Mittelabschnitt 17 und deutlich längere Seitenabschnitte 18 verfügt. Bei letzteren handelt es sich um hochgebogene Randstreifen. Der Mittelabschnitt 17 trägt eine Gewindebuchse 19 mit einer Gewindebohrung 20 zur Aufnahme einer Befestigungsschraube für den Umlenkbeschlag (hier nicht dargestellt).

Vor und hinter der Gewindebuchse 19 sind in den Seitenabschnitten 18 Bohrungen 21 zum Einsetzen (Einpressen) von Rastbolzen 22 vorgesehen, welche danach eine Baueinheit mit dem Verstellteil 7 bilden. Ansonsten sind am Mittelabschnitt noch hochgebogene Stege 23 angeordnet, welche als Begrenzung bzw. Anschlag dienen und im übrigen über Aussparungen 24 verfügen, nämlich zur Aufnahme einer Gleit- und Haltefeder 25.

So komplettiert, kann das Verstellteil 7 in die Führungsschiene 1 eingesetzt und darin in Längsrichtung frei verschoben werden, wenn es gleichzeitig entgegen der Wirkung der Gleit -und Haltefeder 25 in Richtung auf die Grundfläche 3 gedrückt wird. Ohne diesen Druck gerät es mit seinen Rastbolzen 22 bei nächster Gelegenheit in Eingriff mit den sägezahnförmigen Enden 4 und damit in eine Verriegelungsposition. Die jeweilige Lage der Bestandteile zueinander zeigen die Fig. 21 bis 23, wobei in der linken Hälfte der Führungsschiene 1 das Verstellteil 7 in frei beweglichem, also ausgerastetem Zustand und in der rechten Hälfte in eingerastetem, also arretiertem Zustand gezeigt ist.

Die Fig. 24 bis 27 geben eine andere bevorzugte Ausführungsform eines Höhenverstellers wieder, bei der andere Arretiermittel, nämlich eine Zahnplatte 26 vorgesehen sind. Diese ist wiederum im Bereich eines kurzen Mittelabschnittes 17 angeordnet und mit dem Verstellteil 7 starr verbunden. In der linken Hälfte der Fig. 25 und 27 ist das Verstellteil 7 wiederum in ausgerastetem Zustand und in der rechten Hälfte in eingerastetem Zustand (Verriegelungsposition) zu sehen.

Die Fig. 28a bis 32b lassen die Bestandteile eines etwa aufwendiger gestalteten Höhenverstellers erkennen. Im Unterschied zu den beiden zuvor beschriebenen Ausführungsformen sind dabei in sich bewegliche Arretiermittel, sowieein mit einem Gleitteil (Gleitschlitten) 14'' kombiniertes Verstellteil 7' vorgesehen. Das Verstellteil 7' besteht aus Metall und weist lange Seitenabschnitte 18' sowie demgegenüber bogenförmig verkürzte Mittelabschnitte 17' auf und macht damit deutlich, daß der Erfindungsgedanke in vielerlei Form verwirklicht werden kann. Das Verstellteil 7' weist im übrigen in seinen Seitenabschnitten 18' Führungsschlitze 27 für einen Rundbolzen 22' auf, welcher diesmal mit einem Entriegelungshebel 28 verbunden und gegenüber dem Verstellteil 7' beweglich ist. Der Entriegelungshebel 28 ist dazu am Gleitteil bzw. Gleitschlitten 14' angelenkt und von einer Schenkelfeder 29 als elastischem Halteorgan beaufschlagt.

Die restlichen Fig. 33 und 34 verdeutlichen wiederum die Zuordnung und Wirkungsweise der einzelnen Bestandteile im montierten Zustand bzw. lassen auch die weitgehende Verstellmöglichkeit (vgl. Fig. 33) erkennen, d.h. das günstige Verhältnis von nutzbarem Verstellweg V zu notwendigem Befestigungsabstand B, woraus sich die bereits erwähnte kurze Baulänge mit ihren verschiedenen Vorteilen ergibt.

Die in den Fig. 35 bis 37 dargestellte weitere Ausführungsform eines erfindungsgemäßen Höhenverstellers ähnelt den Ausführungsformen gemäß den Fig. 1 folgende. Dabei trägt wiederum ein Arretierteil 11" Rastbolzen 12" und ist in Bezug auf ein Verstellteil 7", d. h. dessen Verschieberichtung in der Führungsschiene 1 zum Entriegeln bzw. Arretieren quer, nämlich rechtwinklig beweglich. In der Arretierstellung werden die Rastbolzen 12" mittels einer zwischen dem Arretierteil 11" und dem Verstellteil 7" wirksamen Druckfeder 34 in die Ausnehmungen 5 der Führungsschiene 1 gedrückt. An ihrem Grund sind die Ausnehmungen 5 der Kontur der nunmehr kantigen Rastbolzen 12" angepaßt.

Wie weiter ersichtlich, trägt das Verstellteil 7" eine Gewindebuchse 19" samt einem Distanzring 37. Ein Entriegelungshebel 28 erleichtert wieder das Freisetzen des Verstellteils 7", um eine neue Höhenposition erreichen zu können. Dazu besitzt das Verstellteil 7" rechtwinklig zur Führungsschiene 1 gerichtete längliche Ausnehmungen 10", entlang denen die Rastbolzen 12" sozusagen niedergedrückt werden können, um sie aus ihrem Formschluß mit den Ausnehmungen 5 der Führungsschiene 1 zu lösen.

Die Ausführungsform gemäß den Fig. 38 bis 40 macht ebenfalls deutlich, daß der Bewegungsmechanismus zwischen Verstellteil und Arretierteil in vielfältiger Weise realisiert werden kann. Diesmal weisen ein Verstellteil 7''' und ein Arretierteil 11''' übereinstimmend längliche Ausnehmungen 10"' auf, welche zwar grundsätzlich wie bisher quer zur Führungsschiene 1 gerichtet sind, jedoch nicht rechtwinklig, sondern schräg verlaufen. Zwischen dem Verstellteil 7''' einerseits und dem Arretierteil 11''' andererseits ist wiederum eine Druckfeder 34 wirksam, wobei sie allerdings so eingespannt ist (vgl. Anschlag bzw. Mitnehmer 38), daß sie in Verschieberichtung des Verstellteils 7''' wirkt. D. h. es kommt jetzt eine Relativbewegung zwischen Verstellteil 7"' und Arretierteil 11''' in Richtung des (Doppel-) Pfeiles 39 zustande, bei der die Rastbolzen 12 infolge der Federkraft und der schräg gestellten Ausnehmungen 10"' automatisch in die höchstmögliche Position gelangen, wo sie dann das Verstellteil 7"' arretieren.

Schiebt man das Arretierteil 11''' in umgekehrter Richtung, so wird das Verstellteil 7''' freigesetzt und läßt sich in eine andere Höhenlage bringen. Auch hierfür ist ein Hebel vorgesehen, welcher aber nicht mehr drehbar zu sein braucht, vielmehr ist er starr mit dem Arretierteil 11''' verbunden, weshalb er eher als Handhabe 28"' für das nunmehr verschiebbare Arretierteil 11''' anzusprechen ist.

Fig. 39 läßt in der linken Hälfte ein Verstellteil 7"' bzw. ein Arretierteil 11''' im entriegelten Zustand und in der rechten Hälfte im verriegelten (arretierten) Zustand erkennen. Für die letztgenannten Ausführungsformen gemäß den Fig. 35 bis 40 gilt, daß dabei die Rastbolzen 12, 12" besonders sicher und genau gehalten sowie geführt sind. Daraus resultiert ein problemfreies und leichtgängiges Ein- und Ausrasten (Arretieren und Entriegeln).

### [Bezugszeichenliste]

- 1: Führungschiene
- 1': Führungsschiene
- 1'': Führungsschiene
- 2: Grundfläche, Auflagefläche
- 3: Seitenschenkel
- 4: Ende
- 5: Ausnehmung
- 6: Längsschlitz
- 7: Verstellteil
- 7': Verstellteil
- 7'': Verstellteil
- 7''': Verstellteil
- 7a: Kernteil
- 8: Ausnehmung
- 9: Ausnehmung
- 10: Ausnehmung
- 10": Ausnehmung
- 10''': Ausnehmung
- 11: Arretierteil
- 11a: Führungsabschnitt
- 11b: Trägerabschnitt
- 11': Arretierteil
- 11": Arretierteil
- 11''': Arretierteil
- 12: Arretierbolzen, -stift;
Rastbolzen, -stift
- 12": Rastbolzen
- 13: Schenkelfeder
- 13a: Schenkelfeder
- 14: Gleitteil, -schlitten
- 14': Gleitteil, -Schlitten
- 14a: Unterteil
- 14b: Oberteil
- 15: Steg
- 15a: elastischer Abschnitt
- 15b: freies Ende
- 16: Lager
- 17: Mittelabschnitt
- 17': Mittelabschnitt
- 18: Seitenabschnitt
- 18': Seitenabschnitt
- 19: Gewindebuchse
- 19'': Gewindebuchse
- 20: Gewindebohrung
- 21: Bohrung
- 22: Rastbolzen
- 22': Rastbolzen
- 23: Steg
- 24: Aussparung
- 25: Gleit- und Haltefeder
- 26: Zahnplatte
- 27: Führungsschlitz
- 28: Entriegelungshebel
- 28''': Handhabe, Entriegelungshebel
- 29: Schenkelfeder
- 30: Gewindebuchse
- 31: Gewindebohrung
- 32: Befestigungsschraube
- 33: Schraube
- 34: Druckfeder
- 35: Bundmutter
- 36: Längsnuten
- 37: Distanzring
- 38: Anschlag, Mitnehmer
- 39: (Doppel-) Pfeil
- V: Verstellweg
- B: Befestigungsabstand

## Patentansprüche

1. Höhenversteller für einen Umlenkbeschlag eines Sicherheitsgurtes in einem Kraftfahrzeug mit
- einer Führungsschiene (1), die eine Grundfläche (2) und davon senkrecht abstehende Seitenscheakel (3) hat, deren freie Enden (4) auf die Grundfläche zurückgebogen sind und sägezahnförmige Ausnehmungen (5) aufweisen;
- einem zwischen den umgebogenen freien Enden (4) der Seitenschenkel gebildeten Längsschlitz (6);
- einem entlang dem Längsschlitz beweglichen Verstellteil (7), der ein lastaufnehmendes U-förmiges Kernteil aufweist, an welchem der Umlenkbeschlag befestigbar ist und welches mit seinen beiden Seitenteilen zwischen den umgebogenen freien Enden (4) der Seitenschenkel und den Seitenschenkeln der Führungsschiene (1) geführt ist; und
- einer quer zur Verschieberichtung zwischen einer Verriegelungsstellung und einer Entriegelungsstellung in Führungsschlitzen (10) des Kernteils (7a) beweglichen Arretiereinrichtung (12) , welche in wählbaren Höhenstufen in die jeweiligen sägezahnförmigen Ausnehmungen für eine Anlage an in den jeweiligen Ausnehmungen (5) gebildeten senkrecht zur Verschieberichtung verlaufenden Sperrkanten mit einer Haltekraft eingreift,
**dadurch gekennzeichnet, daß**
- die Führungsschlitze (10; 27) des Kernteils (7a) an beiden Enden geschlossen sind und
- in den beiden Führungsschlitzen (10, 27) ein Arretierbolzen (12; 22; 22') zwischen einer durch ein Ende der jeweiligen Führungsschlitze (10; 27) festgelegten Verriegelungsstellung und einer Entriegelungsstellung am anderen Schlitzende geführt ist.

2. Höhenversteller nach Anspruch 1, **dadurch gekennzeichnet, daß** der Arretierbolzen (12; 22; 22') mit ebenen Anschlagflächen an der gesamten senkrechten Ausdehnung der jeweiligen Sperrkanten (35) anliegt.

3. Höhenversteller nach Anspruch 1 oder 2, **dadurch gekennzeichnet, daß** in der jeweiligen Höheneinstellung ein Bolzeneingriff an vier Stellen der Führungsschiene (1, 1', 11'') stattfindet.

4. Höhenversteller nach einem der Ansprüche 1 bis 3, **dadurch gekennzeichnet, daß** das aus Metall bestehende Kernteil (7a) mit einem aus Kunststoff bestehenden Gleitschlitten (14) zum Verstellteil (7) kombiniert ist.

5. Höhenversteller nach Anspruch 4, **dadurch gekennzeichnet, daß** am Gleitschlitten (14) ein Entriegelungshebel (28) zum Bewegen des Arretierbolzens (12; 22; 22') in seine Entriegelungsstellung schwenkbar gelagert ist.

6. Höhenversteller nach einem der Ansprüche 1 bis 4, **dadurch gekennzeichnet, daß** das Verstellteil (7) als ein der Führungsschiene (1) weitgehend angepaßtes Formteil mit Ausnehmungen (8) für die Enden (4) und anschließenden Schenkelabschnitte der Führungsschiene (1) sowie ein Arretierteil (11, 11') ausgebildet ist.

7. Höhenversteller nach Anspruch 5, **dadurch gekennzeichnet, daß** das Arretierteil (11, 11') die zwei in parallelem Abstand zueinander verlaufende Arretierbolzen (12) aufweist.

8. Höhenversteller nach Anspruch 4 oder 5, **dadurch gekennzeichnet, daß** das Gleitteil (14) eine dem Querschnitt des Kernteils (7a) angepaßte Struktur zum Aufschieben auf das Kernteil (7a) und im übrigen in Verschieberichtung weisende und am Kopf des Kernteils (7a) zu sichernde Stege (15) oder dergleichen besitzt.

9. Höhenversteller nach einem der Ansprüche 1 bis 7, **dadurch gekennzeichnet, daß** das Kernteil (7a) Längsnuten (36) zur teilweisen Aufnahme der Stege (15) aufweist.

10. Höhenversteller nach Anspruch 8 oder 9, **dadurch gekennzeichnet, daß** die Stege (15) über nach außen gebogene elastische Abschnitte (15a) verfügen.

11. Höhenversteller nach einem der Ansprüche 8 bis 10, **dadurch gekennzeichnet, daß** die freien Enden (15b) der Stege (15) nasenförmig ausgebildet sind und eine Art Clipsverbindung am Kopf des Kernteils (7a) bilden.

12. Höhenversteller nach Anspruch 11, **dadurch gekennzeichnet, daß** das elastische Halteorgan eine zwischen Verstellteil (7) und Arretierteil (11) sich abstützende Schenkelfeder (13) ist.

13. Höhenversteller nach einem der Ansprüche 1 bis 12, **dadurch gekennzeichnet, daß** das Arretierteil (11) in etwa T-förmig ausgebildet ist, wobei es einen Führungsabschnitt (11a) sowie einen Trägerabschnitt (11b) umfaßt, in den die Arretierbolzen (12) eingesetzt sind.

14. Höhenversteller nach einem der Ansprüche 1 bis 13, **dadurch gekennzeichnet, daß** in das Kernteil (7a) eine Gewindebuchse (19) eingepreßt ist, welche die Gewindebohrung (20) zur Aufnahme der Befestigungsschraube (32) für den Umlenkbeschlag enthält.

15. Höhenversteller nach einem der Ansprüche 1 bis 14, **dadurch gekennzeichnet, daß** das Verstellteil (7, 7') über einen verhältnismäßig kurzen Mittelabschnitt (17, 17') sowie verhältnismäßig lange Seitenabschnitte (18, 18') verfügt, wobei am Mittelabschnitt (17, 17') eine Gewindebohrung (20) zur Aufnahme der Befestigungsschraube für den Umlenkbeschlag und in geringer Entfernung davon die Arretiermittel angeordnet sind und wobei die Seitenabschnitte (18, 18') den Mittelabschnitt (17, 17') derart an Länge überragen, daß sie beim Anschlag des Mittelabschnittes (17, 17') an den Befestigungsmitteln der Führungsschiene (1) darüberhinaus noch im restlichen Teil der Führungsschiene (1) von den Seitenschenkeln (3) mit hohem Formschluß gehalten werden.

16. Höhenversteller nach einem der Ansprüche 1 bis 15, **dadurch gekennzeichnet, daß** das Kernteil (7a) aus einem Druckguß besteht.

17. Höhenversteller nach einem der Ansprüche 1 bis 15, **dadurch gekennzeichnet, daß** das Kernteil (7a) aus einem flachen Bandstahl gestanzt und geformt ist.

18. Höhenversteller nach einem der Ansprüche 1 bis 17, **dadurch gekennzeichnet, daß** das Kernteil (7a) einen flachen Mittelabschnitt (17, 17') aufweist, an den sich hochgebogene Randstreifen als Seitenabschnitte (18, 18') anschließen.

19. Höhenversteller nach einem der Ansprüche 1 bis 18, **dadurch gekennzeichnet, daß** der Mittelabschnitt (17) des Verstellteils in Verschieberichtung von hochgebogenen Stegen (23) begrenzt ist und daß zwischen den hochgebogenen Stegen (23) das elastische Halteorgan, insbesondere in Form einer Gleit- und Haltefeder (25) einsetzbar ist.

20. Höhenversteller nach einem der Ansprüche 1 bis 19, **dadurch gekennzeichnet, daß** die Arretiermittel aus mindestens einem von Seitenabschnitt (18) zu Seitenabschnitt (18) reichenden Rastbolzen (12) bestehen.

21. Höhenversteller nach einem der Ansprüche 1 bis 20, **dadurch gekennzeichnet, daß** die Arretiermittel aus einer Zahnplatte (26) bestehen, welche die Gewindebohrung (20) zur Aufnahme der Befestigungsschraube für den Umlenkbeschlag umgibt und starr mit dem Verstellteil (7) verbunden ist.

22. Höhenversteller nach einem der Ansprüche 1 bis 21, **dadurch gekennzeichnet, daß** die Arretiermittel aus mindestens einem Rastbolzen (12") bestehen, welcher quer zum Verstellteil (7") in Bezug auf dessen Verschieberichtung beweglich und von einem elastischen Halteorgan beaufschlagt ist.

23. Höhenversteller nach Anspruch 22, **dadurch gekennzeichnet, daß** der Rastbolzen (12") in Führungsschlitzen (27) der Seitenabschnitte (18') geführt und gegebenenfalls gehalten ist.

24. Höhenversteller nach einem der Ansprüche 1 bis 23, **dadurch gekennzeichnet, daß** die Führungsschiene (1) einen etwa C-förmigen Querschnitt besitzt.

25. Höhenversteller nach einem der Ansprüche 1 bis 24, **dadurch gekennzeichnet, daß** das Verstellteil (7, 7') und/oder die Führungsschiene (1) einen Kunststoffüberzug aufweist.

## Claims

1. Height adjuster for a deflection fitting of a seat belt in a motor vehicle, with
- a guide rail (1) which has a base web (2) and projecting vertically therefrom lateral arms (3) the free ends (4) of which are bent back towards the base web and have sawtooth notches (5);
- a longitudinal slot (6) formed between the bent-over free ends (4) of the lateral arms;
- an adjuster part (7) which is displaceable along the longitudinal slot and has a load-bearing U-shaped core part to which the deflection fitting is attachable and which is guided by its two lateral parts between the lateral arms of the guide rail (1) and their bent-over free ends (4); and
- a locking device (12) which is movable in a direction at right angles to the displacement direction in guide slots (10) in the core part (7a) between a locking position and an unlocking position and which engages with holding force at selectable heights in the appropriate sawtooth notches so as to bear on catch edges formed in the individual notches (5) and extending perpendicularly to the displacement direction,
**characterized in that**
- the guide slots (10; 27) in the core part (7a) are closed at both ends and

2. Height adjuster according to Claim 1, **characterized in that** the locking bolt (12; 22; 22') bears by flat stop faces on the entire vertical extent of the respective catch edges (35).
- a locking bolt (12; 22; 22') is guided in each of the two guide slots (10; 27) between a locking position defined by one end of the slot (10; 27) and an unlocking position at the other end of the slot.

3. Height adjuster according to Claim 1 or Claim 2, **characterized in that** a bolt engagement occurs at four places on the guide rail (1, 1', 11") in every height setting.

4. Height adjuster according to any one of Claims 1 to 3, **characterized in that** the metal core part (7a) is combined with a slider (14) of plastic material to form the adjuster part (7).

5. Height adjuster according to Claim 4, **characterized in that** an unlocking lever (28) for shifting the locking bolt (12; 22; 22') into its unlocking position is pivotably mounted on the slider (14).

6. Height adjuster according to any one of Claims 1 to 4, **characterized in that** the adjuster part (7) is configured as a moulding adapted, to a large extent, to the guide rail (1), with recesses (8) for the ends (4) and adjoining portions of the guide rail (1); plus a locking part (11, 11').

7. Height adjuster according to Claim 5, **characterized in that** the locking part (11, 11') comprises the two locking bolts (12) extending parallel with one another and spaced apart.

8. Height adjuster according to Claim 4 or Claim 5, **characterized in that** the slider (14) possesses a structure adapted to the cross-section of the core part (7a), for slipping on to the core part (7a); and has webs (15) or the like pointing in the displacement direction, for securing the slider on the head of the core part (7a).

9. Height adjuster according to any one of Claims 1 to 7, **characterized in that** the core part (7a) has longitudinal grooves (36) to partly accommodate the webs (15).

10. Height adjuster according to Claim 8 or Claim 9, **characterized in that** the webs (15) possess outwards-curving elastic portions (15a).

11. Height adjuster according to any one of Claims 8 to 10, **characterized in that** the free ends (15b) of the webs (15) are configured as nebs and form a kind of clip-on connection to the head of the core part (7a).

12. Height adjuster according to Claim 11, **characterized in that** the elastic keeper element is a leg spring (13) gripped between the adjuster part (7) and locking part (11).

13. Height adjuster according to any one of Claims 1 to 12, **characterized in that** the locking part (11) is approximately T-shaped and comprises a guide portion (11a) and a carrier portion (11b) into which the locking bolts (12) are inserted.

14. Height adjuster according to any one of Claims 1 to 13, **characterized in that** a threaded bush (19) which contains the threaded bore (20) to receive the fixing screw (32) for the deflection fitting is pressed into the core part (7a).

15. Height adjuster according to any one of Claims 1 to 14, **characterized in that** the adjuster part (7, 7') possesses a relatively short centre portion (17, 17') and relatively long side portions (18, 18'), a threaded bore (20) to receive the fixing screw for the deflection fitting, and, at a short distance therefrom, the locking means, being arranged on the centre portion (17, 17'), and the side portions (18, 18') projecting lengthwise beyond the centre portion (17, 17') so that when the centre portion (17, 17') abuts against the fixing means of the guide rail (1) the side portions (18, 18') are also positively clasped in the remaining part of the guide rail (1) by the lateral arms (3).

16. Height adjuster according to any one of Claims 1 to 15, **characterized in that** the core part (7a) consists of a diecasting.

17. Height adjuster according to any one of Claims 1 to 15, **characterized in that** the core part (7a) is stamped and formed from flat steel strip.

18. Height adjuster according to any one of Claims 1 to 17, **characterized in that** the core part (7a) has a flat centre portion (17, 17') to which bent-up edge-strips forming side portions (18, 18') are joined.

19. Height adjuster according to any one of Claims 1 to 18, **characterized in that** the centre portion (17) of the adjuster part is bounded in the displacement direction by bent-up webs (23), and **in that** the elastic keeper element, in particular in the form of a sliding and securing spring (25), is insertable between the bent-up webs (23).

20. Height adjuster according to any one of Claims 1 to 19, **characterized in that** the locking means consist of at least one latch bolt (12) reaching from one side portion (18) to the other.

21. Height adjuster according to any one of Claims 1 to 20, **characterized in that** the locking means consist of a serrated plate (26) which surrounds the threaded bore (20) to receive the fixing screw for the deflection fitting and is rigidly connected to the adjuster part (7).

22. Height adjuster according to any one of Claims 1 to 21, **characterized in that** the locking means consist of at least one latch bolt (12") which is movable in a direction at right angles to the displacement direction of the adjuster part (7") and is acted on by an elastic keeper element.

23. Height adjuster according to Claim 22, **characterized in that** the latch bolt (12") is guided, and as required held, in guide slots (27) in the side portions (18').

24. Height adjuster according to any one of Claims 1 to 23, **characterized in that** the guide rail (1) has an approximately C-shaped cross-section.

25. Height adjuster according to any one of Claims 1 to 24, **characterized in that** the adjuster part (7, 7') and/or the guide rail (1) has a plastic coating.

## Revendications

1. Dispositif de réglage en hauteur pour un ancrage de renvoi d'une ceinture de sécurité dans un véhicule à moteur, comportant :
- une glissière de guidage (1), ayant une face de base (2) et des branches latérales (3) faisant saillie perpendiculairement de celle-ci, dont les extrémités libres (4) sont repliées sur la face de base et présentent des évidements (5) en forme de dents de scie ;
- une fente longitudinale (6) formée entre les extrémités libres (4) repliées des branches latérales ;
- une partie de réglage (7) mobile le long de la fente longitudinale, présentant une partie formant noyau en forme de U supportant une charge, à laquelle l'ancrage de renvoi peut être fixé et qui est guidé par ses deux parties latérales entre les extrémités libres (4) repliées des branches latérales et les branches latérales de la glissière de guidage (1) ; et
- un dispositif de blocage (12) mobile dans des fentes de guidage (10) de la partie formant noyau (7a), transversalement par rapport à la direction de déplacement, entre une position de verrouillage et une position de déverrouillage, dispositif de blocage s'engageant, avec une force de maintien, en des niveaux de hauteurs pouvant être sélectionnés, dans les évidements de scie respectifs, pour assurer un appui sur des arêtes de blocage s'étendant perpendiculairement à la direction de déplacement et formées dans les évidements (5) respectifs,
**caractérisé en ce que**
- les fentes de guidage (10; 27) de la partie formant noyau (7a) sont fermées aux deux extrémités, et
- dans les deux fentes de guidage (10, 27) est guidé un boulon de blocage (12; 22; 22'), entre une position de verrouillage, fixée par une extrémité des fentes de guidage (10; 27) respectives, et une position de déverrouillage, à l'autre extrémité de fente.

2. Dispositif de réglage en hauteur selon la revendication 1, **caractérisé en ce que** le boulon de blocage (12; 22; 22') appuie, par des faces de butée planes sur l'étendue globale perpendiculaire des arêtes de blocage (35) respectives.

3. Dispositif de réglage en hauteur selon la revendication 1 ou 2, **caractérisé en ce qu'**au réglage en hauteur respectif se produit un engagement de boulon en quatre endroits de la glissière de guidage (1, 1', 11").

4. Dispositif de réglage en hauteur selon l'une des revendications 1 à 3, **caractérisé en ce que** la partie formant noyau (7a) formée de métal est combinée avec un coulisseau de glissement (14) formé de matière synthétique, pour donner la partie de réglage (7).

5. Dispositif de réglage en hauteur selon la revendication 4, **caractérisé en ce que** sur le chariot coulissant (14) est monté à pivotement un levier de déverrouillage (28), pour déplacer le boulon de blocage (12; 22; 22') à sa position de déverrouillage.

6. Dispositif de réglage en hauteur selon l'une des revendications 1 à 4, **caractérisé en ce que** la partie de réglage (7) est réalisée sous la forme d'une pièce moulée, largement adaptée à la glissière de guidage (1), comportant des évidements (8) pour les extrémités (4) et des tronçons de branche raccordés de la glissière de guidage (1), ainsi qu'une partie de blocage (11, 11').

7. Dispositif de réglage en hauteur selon la revendication 5, **caractérisé en ce que** la partie de blocage (11, 11') présente les deux boulons de blocage (12) s'étendant parallèlement et à distance l'un de l'autre.

8. Dispositif de réglage en hauteur selon la revendication 4 ou 5, **caractérisé en ce que** la partie de glissement (14) présente une structure adaptée à la section transversale de la partie formant noyau (7a), pour enfilement sur la partie formant noyau (7a) et, au reste, présente des nervures (15) ou analogues, tournées dans la direction de déplacement et à fixer sur la tête de la partie formant noyau (7a).

9. Dispositif de réglage en hauteur selon l'une des revendications 1 à 7, **caractérisé en ce que** la partie formant noyau (7a) présente des rainures longitudinales (36) pour loger partiellement les nervures (15).

10. Dispositif de réglage en hauteur selon la revendication 8 ou 9, **caractérisé en ce que** les nervures (15) disposent de tronçons (15a) élastiques coudés vers l'extérieur.

11. Dispositif de réglage en hauteur selon l'une des revendications 8 à 10, **caractérisé en ce que** les extrémités libres (15b) des nervures (15) sont réalisées en forme d'ergot et forment un genre de liaison à encliquetage sur la tête de la partie formant noyau (7a).

12. Dispositif de réglage en hauteur selon la revendication 11, **caractérisé en ce que** l'organe de maintien élastique est un ressort à branche (13), prenant appui entre la partie de réglage (7) et la partie de blocage (11).

13. Dispositif de réglage en hauteur selon l'une des revendications 1 à 12, **caractérisé en ce que** la partie de blocage (11) est à peu près en forme de T, sachant qu'elle comprend un tronçon de guidage (11a) ainsi qu'un tronçon support (11b), dans lequel sont insérés les boulons de blocage (12).

14. Dispositif de réglage en hauteur selon l'une des revendications 1 à 13, **caractérisé en ce que**, dans la partie formant noyau (7a), est pressée une douille filetée (19) contenant le trou taraudé (20) devant recevoir la vis de fixation (32) pour l'ancrage de renvoi.

15. Dispositif de réglage en hauteur selon l'une des revendications 1 à 14, **caractérisé en ce que** la partie de réglage (7, 7') dispose d'un tronçon médian (17, 17') relativement court, ainsi que de tronçons latéraux (18, 18') relativement longs, sachant que, sur le tronçon médian (17, 17'), est disposé un trou taraudé (20) devant recevoir la vis de fixation de l'ancrage de renvoi et, à faible distance de cela, sont disposés les moyens de blocage, et les tronçons latéraux (18, 18') dépassant en longueur du tronçon médian (17, 17'), de manière que, lors de la mise en butée du tronçon médian (17, 17') sur les moyens de fixation de la glissière de guidage (1), de plus encore ils soient maintenus avec une forte liaison par ajustement de forme dans la partie restante de la glissière de guidage (1), par les branches latérales (3).

16. Dispositif de réglage en hauteur selon l'une des revendications 1 à 15, **caractérisé en ce que** la partie formant noyau (7a) est formée d'une pièce moulée sous pression.

17. Dispositif de réglage en hauteur selon l'une des revendications 1 à 15, **caractérisé en ce que** la partie formant noyau (7a) est obtenu par estampage et formage à partir d'une bande d'acier plate.

18. Dispositif de réglage en hauteur selon l'une des revendications 1 à 17, **caractérisé en ce que** la partie formant noyau (7a) présente un tronçon médian (17, 17') plat, auquel se raccordent des bandes de bordure relevées par pliage, faisant office de tronçons latéraux (18, 18').

19. Dispositif de réglage en hauteur selon l'une des revendications 1 à 18, **caractérisé en ce que** le tronçon médian (17) de la partie de manoeuvre est limité en direction de déplacement par des nervures (23) relevées par pliage et que, entre les nervures (23) relevées par pliage, l'organe de maintien élastique, en particulier réalisé sous la forme d'un ressort de glissement et de maintien (25), peut être inséré.

20. Dispositif de réglage en hauteur selon l'une des revendications 1 à 19, **caractérisé en ce que** les moyens de blocage sont formés d'au moins un boulon d'encliquetage (12), allant du tronçon latéral (18) au tronçon latéral (18).

21. Dispositif de réglage en hauteur selon l'une des revendications 1 à 20, **caractérisé en ce que** les moyens de blocage sont formés d'une plaque dentée (26), qui entoure le trou taraudé (20) prévu pour recevoir la vitesse de fixation de l'ancrage de renvoi et est relié rigidement à la partie de réglage (7).

22. Dispositif de réglage en hauteur selon l'une des revendications 1 à 21, **caractérisé en ce que** les moyens de blocage sont formés d'au moins un boulon d'encliquetage (12"), mobiles transversalement par rapport à la pièce de réglage (7"), en se référant à sa direction de déplacement, et sollicités par un organe de maintien élastique.

23. Dispositif de réglage en hauteur selon la revendication 22, **caractérisé en ce que** le boulon d'encliquetage (12") est guidé et, le cas échéant, maintenu dans la fente de guidage (27) des tronçons latéraux (18').

24. Dispositif de réglage en hauteur selon l'une des revendications 1 à 23, **caractérisé en ce que** la glissière de guidage (1) présente une section transversale à peu près en forme de C.

25. Dispositif de réglage en hauteur selon l'une des revendications 1 à 24, **caractérisé en ce que** la partie de réglage (7, 7') et/ou la glissière de guidage (1) présente(nt) un revêtement en matière synthétique.
